# EUROPEAN PATENT APPLICATION

(11) **EP 4 667 777 A1**
(43) Date of publication of application: **24.12.2025**
(21) Application number: 24756522.9
(22) Date of filing: 12.01.2024
(51) Int. Cl.: F16G 13/06

(54) **CHAIN**

(30) Priority: 16.02.2023 JP 2023022420; 26.10.2023 JP 2023184155
(71) Applicant: Tsubakimoto Chain Co., Osaka-shi, Osaka 530-0005 (JP)
(72) Inventor: KAMEI, Takayuki, Osaka-shi, Osaka 530-0005 (JP); GOTO, Naoki, Osaka-shi, Osaka 530-0005 (JP); TANIGUCHI, Tomoharu, Osaka-shi, Osaka 530-0005 (JP); MURAGUCHI, Makoto, Osaka-shi, Osaka 530-0005 (JP)
(74) Representative: Keenway Patentanwälte Neumann Heine Taruttis
(86) International application number: PCT/JP2024/000529
(87) International publication number: WO 2024/171670

(57) **Abstract**

This chain (11) comprises a plurality of pairs of inner link plates (14), a plurality of cylindrical bushes (16), a plurality of pins (18) that are respectively inserted into the plurality of bushes (16), and a plurality of pairs of outer link plates (15). Each of the bushes (16) connects the inner link plates (14) together in the corresponding pair. The two outer link plates (15) in each pair are disposed so as to sandwich two mutually adjacent pairs of inner link plates (14) from the outside. Two outer link plates (15) in the corresponding pair are disposed at the ends of each pin (18). The plurality of bushes (16) and the plurality of pins (18) are disposed so that two pins (18) are positioned between the two outer link plates (15) in each pair. The distance (P1) between the axes of adjacent pins (18) is 0.8-3 mm.

## Description

### TECHNICAL FIELD

The present disclosure relates to a chain.

### BACKGROUND ART

Patent Literature 1 describes a roller chain having a pitch of 12.7 mm. Outer link plates of the roller chain each have a length La of 22 (-1.5 to +0.5), a width Ma of 9 (-1.5 to +0.5), and a narrowed part having a width Na of 5 (-1 to +1). Inner link plates of the roller chain each have a length Lb of 23 (-1.5 to +0.5), a width Mb of 1.5 (-1.5 to +0.5), and a narrowed part having a width Nb of 6.5 (-1.5 to +0.5). The inner link plates and the outer link plates each have a thickness T of 1.2 (-0.1 to +0.25). The roller chain having the above-mentioned dimensions is lightweight, resistant to elongation, and reduces the manufacturing costs.

Patent Literature 2 describes an endoscope including a handle portion and a probe portion detachably attached to the handle. The probe portion includes a probe on which a camera or the like may be mounted. When the handle portion is operated, the probe may be moved up and down or left and right by a chain connected to the handle portion.

### CITATION LIST

### Patent Literature

Patent Literature 1: Japanese Registered Utility Model No. 3232838
Patent Literature 2: International Publication No. 2019/203593

### SUMMARY OF INVENTION

### Technical Problem

Attempts have been made to use chains in small-sized devices. Accordingly, there is a need for ultra-compact chains that can be readily used in small-sized devices.

### Solution to Problem

A chain in accordance with an aspect of the present disclosure includes pairs of inner link plates, cylindrical bushings, pins, and pairs of outer link plates. The pairs of inner link plates each include two inner link plates facing each other. Each of the bushings is located between the two inner link plates and connects the two inner link plates. The pins are respectively inserted into the bushings in a rotatable manner. The pairs of outer link plates each include two outer link plates sandwiching two of the pairs of inner link plates arranged adjacent to each other. The two outer link plates are arranged at opposite ends of a corresponding one of the pins. The bushings and the pins are arranged so that two of the pins are located between the two outer link plates. A distance between axes of adjacent ones of the pins is 0.8 mm or greater and 3 mm or less.

### BRIEF DESCRIPTION OF DRAWINGS

Fig. 1 is an exploded perspective view schematically showing part of a chain in accordance with an embodiment.
Fig. 2 is a cross-sectional view schematically showing part of the chain in accordance with the embodiment.
Fig. 3 is an exploded perspective view schematically showing part of a chain of a modified example.
Fig. 4 is a cross-sectional view schematically showing part of the chain of the modified example.

### DESCRIPTION OF EMBODIMENTS

A chain 11 in accordance with an embodiment of the present disclosure will now be described.

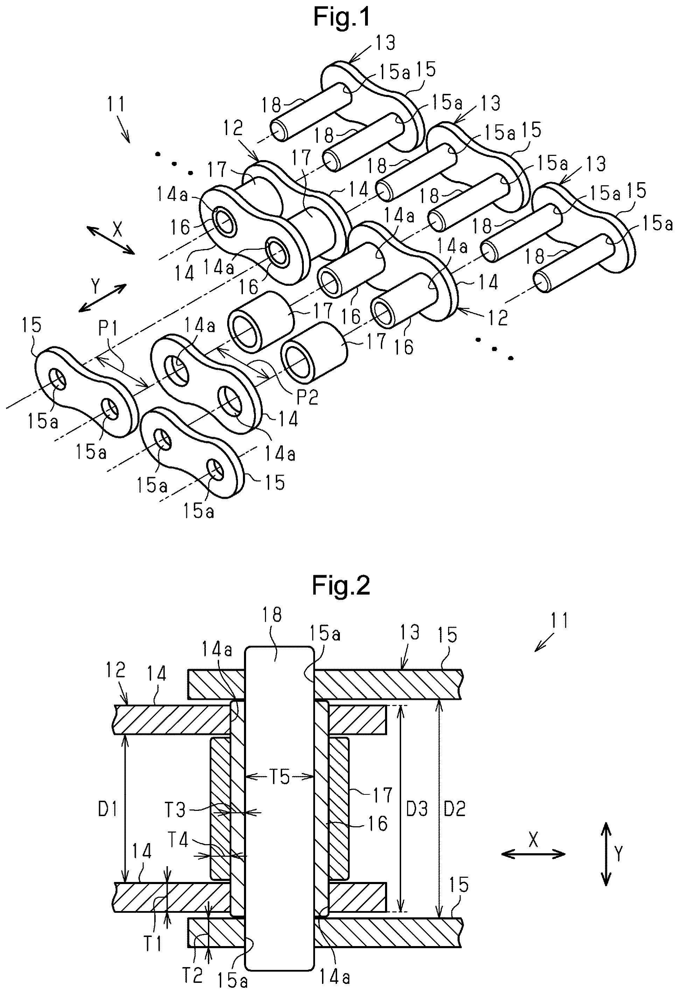

As shown in Figs. 1 and 2, a chain 11 of the present embodiment includes inner links 12 and outer links 13 that are arranged in a lengthwise direction X of the chain 11. The inner links 12 and the outer links 13 are alternately arranged in the lengthwise direction X.

Each of the inner links 12 includes two paired inner link plates 14 facing each other and spaced apart from each other by a distance D1 in a widthwise direction Y that is orthogonal to the lengthwise direction X of the chain 11. Therefore, the chain 11 includes multiple pairs of the inner link plates 14. Further, each of the inner links 12 includes a cylindrical bushing 16 and a cylindrical roller 17. The bushing 16 is located between two paired inner link plates 14 and connects the inner link plates 14. The roller 17 is fitted onto the bushing 16 in a rotatable manner.

Each of the outer links 13 includes two paired outer link plates 15 facing each other and spaced apart from each other by a distance D2 in the widthwise direction Y that is orthogonal to the lengthwise direction X of the chain 11. Therefore, the chain 11 includes multiple pairs of the outer link plates 15. Further, each of the outer links 13 includes a rod-shaped pin 18 inserted into the bushing 16 in a rotatable manner. Two paired outer link plates 15 are arranged at opposite ends of the pin 18 and sandwich two adjacent pairs of the inner link plates 14. Two pins 18 are located between the two paired outer link plates 15, and a pitch P1 between axes of the two adjacent pins 18 is 0.8 mm or greater and 3 mm or less. Also, a pitch P2 between axes of two adjacent pins 18 in adjacent ones of the outer link plates 15 in the lengthwise direction X is 0.8 mm or greater and 3 mm or less. Hereinafter, the pitch P1 or P2 between the axes of two adjacent pins 18 may also be referred to as the pitch of the chain 11. Preferably, the pitch P1 between the axes of two adjacent pins 18 located between two paired outer link plates 15 is the same as the pitch P2 between the axes of two adjacent pins 18 in adjacent ones of the outer link plates 15 in the lengthwise direction X.

Details of the chain 11 will now be described.

### Inner Link Plate

As shown in Figs. 1 and 2, each of the inner link plates 14 is a plate member. The inner link plate 14 includes semicircular longitudinal ends that are facing away from each other. The longitudinally central part of the inner link plate 14 has a narrowed shape that curves inwardly from transverse ends of the inner link plate 14.

The inner link plate 14 includes a through hole 14a in each of the longitudinal ends with respect to the longitudinally central part. In other words, the inner link plate 14 includes two through holes 14a aligned with each other in the longitudinal direction of the inner link plate 14.

Although not particularly limited, it is preferred that the inner link plate 14 has a thickness T1 of 0.1 mm or greater and 0.4 mm or less. The inner link plate 14 having the thickness T1 within the above-described numerical range is reduced in weight while maintaining its mechanical strength.

Although not particularly limited, it is preferred that the inner link plate 14 has a width of 0.9 mm or greater and 2.8 mm or less. The width of the inner link plate 14 refers to a transverse dimension of the inner link plate 14 at a location having the largest length except for the narrowed portion. When the inner link plate 14 has the width within the above-described numerical range, the chain 11 is relatively small in dimension in a direction orthogonal to both the lengthwise direction X and the widthwise direction Y of the chain 11.

The through hole 14a of the inner link plate 14 has a diameter slightly smaller than an outer diameter of a circumferential wall of the bushing 16, which will be discussed later.

As described below, when opposite ends of the bushing 16 are respectively press-fitted into the through holes 14a of two paired inner link plates 14, the inner link plates 14 face each other and are spaced apart by the distance D1.

Although not particularly limited, it is preferred that the distance D1 between two paired inner link plates 14 is 1 mm or greater and 3 mm or less.

### Outer Link Plate

As shown in Figs. 1 and 2, each of the outer link plates 15 is a plate member. The outer link plate 15 includes semicircular longitudinal ends that are facing away from each other. The longitudinally central part of the outer link plate 15 has a narrowed shape that curves inwardly from transverse ends of the outer link plate 15.

The outer link plate 15 includes a pin insertion hole 15a in each of the longitudinal ends with respect to the longitudinally central part. In other words, the outer link plate 15 includes two pin insertion holes 15a aligned with each other in the longitudinal direction of the outer link plate 15.

Although not particularly limited, it is preferred that the distance between the centers of the pin insertion holes 15a is the same as the pitch of the chain 11.

Although not particularly limited, it is preferred that the outer link plate 15 has a thickness T2 that is the same as the thickness T1 of the inner link plate 14.

Although not particularly limited, it is preferred that the outer link plate 15 has the same width as the inner link plate 14.

The pin insertion hole 15a has a diameter slightly smaller than a diameter T5 of the pin 18, which will be described later.

As described below, when opposite ends of the pin 18 are respectively press-fitted into the pin insertion holes 15a of two paired outer link plates 15, the outer link plates 15 face each other and are spaced apart by the distance D2 in the widthwise direction Y, which is orthogonal to the lengthwise direction X of the chain 11. The distance D2 may also be referred to as the separation distance of the two paired outer link plates 15.

Although not particularly limited, the distance D2 between two paired outer link plates 15 is slightly greater than a distance D3 between the outer surfaces of two paired inner link plates 14.

Preferably, the distance D2 between two paired outer link plates 15 is, for example, 0.9 mm or greater and 3 mm or less, and more preferably, 1.8 mm or greater and 3 mm or less.

When the distance D2 between two paired outer link plates 15 is 0.9 mm or greater, misalignment of sprockets may be readily absorbed. This avoids wear of the chain 11 caused by the misalignment of the sprockets. Further, when the distance D2 between two paired outer link plates 15 is 3 mm or less, the chain 11 is reduced in dimension in the widthwise direction Y.

### Bushing

As shown in Figs. 1 and 2, each of the bushings 16 has a cylindrical shape. Specifically, in a cross section taken in a radial direction, the bushing 16 has a cylindrical circumferential wall.

The bushing 16 is separate from two paired inner link plates 14, and two axial ends of the bushing 16 are respectively press-fitted into the through holes 14a of the two paired inner link plates 14.

Although not particularly limited, it is preferred that the bushing 16 has a thickness, that is a thickness T3 of the circumferential wall, of 0.05 mm or greater and 0.2 mm or less. The bushing 16 having the thickness T3 of the circumferential wall within the above-described numerical range is reduced in weight while maintaining its mechanical strength.

Although not particularly limited, it is preferred that a ratio of the thickness T3 of the circumferential wall of the bushing 16 to the pitch of the chain 11 is 0.05 or greater and 0.2 or less. When the ratio of thickness T3 of the circumferential wall of the bushing 16 to the pitch of the chain 11 is 0.05 or greater, the dimensional accuracy of the bushing 16 is improved. Further, when the ratio of the thickness of the circumferential wall of the bushing 16 to the pitch of the chain 11 is 0.2 or less, the chain 11 is reduced in weight.

Although not particularly limited, it is preferred that the outer diameter of the bushing 16, or the outer diameter of the circumferential wall of the bushing 16, is 0.4 mm or greater and 1.3 mm or less.

Although not particularly limited, it is preferred that the inner diameter of the bushing 16, or the inner diameter of the circumferential wall of the bushing 16, is 0.3 mm or greater and 1.0 mm or less.

### Roller

As shown in Figs. 1 and 2, each of the rollers 17 has a cylindrical shape. Specifically, in a cross section taken in a radial direction, the roller 17 has a cylindrical circumferential wall.

The roller 17 is fitted onto the bushing 16 in a rotatable manner. Specifically, the circumferential wall of the roller 17 has an inner diameter greater than the outer diameter of the circumferential wall of the bushing 16. Thus, the roller 17 is loosely fitted to the bushing 16.

Although not particularly limited, it is preferred that the roller 17 has a thickness, that is a thickness T4 of the circumferential wall, of 0.08 mm or greater and 0.3 mm or less.

The roller 17 having the thickness T4 of the circumferential wall within the above-described numerical range is reduced in weight while maintaining its mechanical strength.

Although not particularly limited, it is preferred that the outer diameter of the roller 17, or the outer diameter of the circumferential wall of the roller 17, is 0.5 mm or greater and 1.8 mm or less.

Although not particularly limited, it is preferred that the inner diameter of the roller 17, or the inner diameter of the circumferential wall of the roller 17, is 0.4 mm or greater and 1.4 mm or less.

The length of the roller 17, or the axial length of the circumferential wall of the roller 17, is slightly shorter than the distance D1 between two paired inner link plates 14.

### Pin

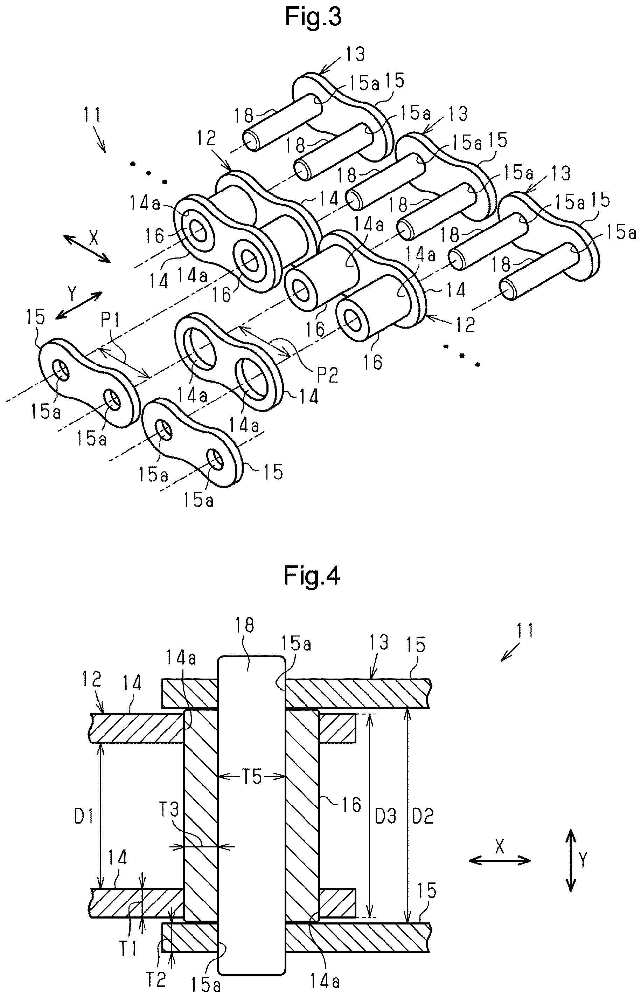

As shown in Figs. 1 and 2, each of the pins 18 is rod-shaped. Specifically, in a cross section taken in a radial direction, the pin 18 has a round columnar shape. In Figs. 2 and 4, the pin 18 is shown in side view.

Two axial ends of the pin 18 are respectively inserted into the pin insertion holes 15a of two paired outer link plates 15, such that the pin 18 is press-fitted into the pin insertion holes 15a. Further, the two axial ends of the pin 18 each have a tip portion projecting out of the pin insertion hole 15a of the outer link plate 15 in the widthwise direction Y of the chain 11.

The pin 18 is inserted into the bushing 16 in a rotatable manner. In other words, the diameter T5 of the pin 18 is smaller than the diameter of the through hole 14a of the inner link plate 14 and the inner diameter of the circumferential wall of the bushing 16. The pin 18 is configured to be rotatable inside the bushing 16.

Although not particularly limited, it is preferred that the diameter T5 of the pin 18 is 0.2 mm or greater and 1 mm or less. The pin 18 having the diameter within the above-described numerical range is reduced in weight while maintaining its mechanical strength.

Preferably, an upper limit of the pitch P1, P2 between the axes of two adjacent pins 18, or an upper limit of the pitch of the chain 11, is 2.9 mm, more preferably, 2.6 mm, even more preferably, 2.3 mm, and most preferably, 2.0 mm. The chain 11 having the upper limit of the pitch within the above-described numerical range is further reduced in size. The chain 11 having the pitch of 3 mm or less will be referred to as an ultra-compact chain 11.

Although not particularly limited, it is preferred that a lower limit of the pitch of the chain 11 is, for example, 0.8 mm, and more preferably, 0.9 mm. The chain 11 having the lower limit of the pitch within the above-described numerical range is readily manufactured, thereby improving the production efficiency.

Preferably, the pin 18 is a cold-drawn body formed by cold-drawing a metal wire. When the pin 18 is a cold-drawn body, the dimensional accuracy of the pin 18 is improved.

The materials of the components of the chain 11 will now be described.

### Materials of Components of Chain

Although not particularly limited, the components of the chain 11, namely, the inner link plate 14, the outer link plate 15, the bushing 16, the roller 17, and the pin 18, may be formed from a known material.

The known material includes, for example, metal, plastic, or the like. Metal increases mechanical strength and is thus more preferred.

Preferably, metal includes a work-hardening material having a hardness increased by cold-working, instead of a material having a hardness increased by heating, such as quenching. When a work-hardening material having a hardness increased by cold-working is used, the components will not have dimensional changes resulting from heating, such as quenching. Therefore, the components of the chain 11 have a relatively high dimension accuracy, as compared to when heating, such as quenching, is performed.

A work-hardening material refers to a metal material having the property of becoming harder when the material is plastically deformed by stress applied by cold-working. Cold-working refers to processing that plastically deforms a metal material at a normal temperature or at a temperature lower than the recrystallization temperature of the metal material.

Specific examples of cold-working include cold-rolling, cold-drawing, cold-extrusion, cold-pressing, cold-forging, or the like.

The level of work hardening of a work-hardening material is indicated by a value referred to as a work hardening coefficient in a range of 0 to 1, inclusive. When the work hardening coefficient is closer to 1, the level of work hardening is higher. In other words, such a work-hardening material is relatively easily hardened by cold-working. In the chain 11 of the present embodiment, it is preferred that a work-hardening material having a work hardening coefficient of 0.3 or greater is used.

Although not particularly limited, specific examples of the work-hardening material may include stainless steel. Preferably, stainless steel includes spring stainless steel. When the work-hardening material is stainless steel, the chain 11 is highly resistant to corrosion. Further, when the hardness of stainless steel is increased by cold-working, a core hardness may be 310 Hv or greater in Vickers hardness. It is preferred that stainless steel has a Vickers hardness of 370 Hv or greater.

The type of stainless steel is not particularly limited. For example, a martensite stainless steel having a work hardening coefficient of 0.15 or greater, or an austenitic stainless steel having a work hardening coefficient of 0.35 or greater may be used. An austenitic stainless steel ensures a greater hardness and is thus more preferred.

Specific examples of austenitic stainless steel include SUS301, SUS302, SUS304, or the like.

When manufacturing a plate-shaped member or a cylindrical member, such as the inner link plate 14, the outer link plate 15, the bushing 16, or the roller 17, from an austenitic stainless steel, it is preferred that a spring stainless steel strip is used. Specific examples of spring stainless steel strip include SUS301-CSP, SUS304-CSP, or the like.

When manufacturing a rod-shaped member, such as the pin 18, from an austenitic stainless steel, it is preferred that a spring stainless steel wire is used. Specific examples of spring stainless steel wire include SUS302-WPB, SUS304-WPB, SUS301N1-WPB, or the like.

The components of the chain 11 may be manufactured using only one type of the above-described work-hardening materials. That is, the components may be formed from the same type of work-hardening material. Alternatively, at least one of the components of the chain 11 may be manufactured using a different type of work-hardening material from the other components.

A method for manufacturing the chain 11 will now be described.

### Manufacturing Method of Chain

The method for manufacturing the chain 11 includes a hardening step of hardening a work-hardening material, a molding step of molding components using the work-hardening material obtained by the hardening step, and an assembling step of coupling the components obtained by the molding step. Each of the steps will now be described.

### Hardening Step

In the hardening step, a work-hardening material is cold-worked and hardened. When manufacturing a plate-shaped member or a cylindrical member, such as the inner link plate 14, the outer link plate 15, the bushing 16, or the roller 17, a spring stainless steel strip (e.g., SUS301-CSP) is cold-rolled so that the Vickers hardness of the core becomes 310 Hv or greater.

When manufacturing a rod-shaped member, such as the pin 18, a spring stainless steel wire (e.g., SUS302-WPB) is cold-drawn so that the Vickers hardness of the core becomes 310 Hv or greater. The cold-drawing performed to manufacture the pin 18 may also serve as part of the molding step of the pin 18, which will be described later. When the cold-drawing of the pin 18 also serves as part of the molding step of the pin 18, the manufacturing process of the pin 18 may be simplified. Cold-working, such as cold-drawing, provides a higher dimensional accuracy than machining.

### Molding Step

In the molding step, a component is molded using the work-hardening material obtained by the hardening step.

When molding the inner link plate 14 or the outer link plate 15, for example, the work-hardening material that was cold-rolled in the hardening step is stamped into a predetermined shape. The through hole 14a of the inner link plate 14 and the pin insertion hole 15a of the outer link plate 15 may also be formed by stamping.

When molding the bushing 16 or the roller 17, for example, the work-hardening material that was cold-rolled in the hardening step is stamped into a predetermined shape, and then bent, or curled, into a cylindrical shape. Further, ends of the curled work-hardening material are joined to each other. Joining the ends of the work-hardening material means bringing the ends of the work-hardening material into contact with each other.

When molding the pin 18, the work-hardening material that was cold-drawn in the hardening step is cut into a predetermined length.

### Assembling Step

In the assembling step, the components obtained by the molding step are coupled to one another to assemble the chain 11.

As shown in Figs. 1 and 2, first, two inner link plates 14 are prepared, and then two bushings 16 are respectively press-fitted into the two through holes 14a of one of the inner link plates 14. This attaches each bushing 16 to the inner link plate 14 with a first axial end press-fitted into the through hole 14a.

Next, two rollers 17 are respectively fitted onto the two bushings 16, which are attached to one of the inner link plates 14, from the side of second axial ends of the bushings 16. Further, another one of the inner link plates 14 is attached to the bushings 16, onto which the rollers 17 are fitted, from the side of the second axial ends of the bushings 16. Specifically, the second axial ends of the bushings 16, onto which the rollers 17 are fitted, are respectively press-fitted into the through holes 14a of the other one of the inner link plates 14.

A single inter link 12 may be obtained through the above-described procedures. The first and second axial ends of each bushing 16 are respectively press-fitted into the through holes 14a of the two paired link plates 14. Accordingly, the two paired inner link plates 14 are connected to each other by the bushing 16. The above procedures are repeated to obtain multiple inner links 12.

Subsequently, two outer link plates 15 are prepared, and then two pins 18 are respectively press-fitted into the two pin insertion holes 15a of one of the outer link plates 15. This attaches each pin 18 to the outer link plate 15 with the tip of a first axial end projecting out of the pin insertion hole 15a.

Next, two of the inner links 12 obtained as described above are prepared. One of the pins 18, which are attached to one of the outer link plates 15, is inserted into one of the bushings 16, which are attached to one of the two inner links 12.

Further, the other one of the pins 18, which are attached to one of the outer link plates 15, is inserted into one of the bushings 16, which are attached to the other one of the two inner links 12. Then, another one of the outer link plates 15 is attached to the pins 18, which are inserted into the bushings 16 of the two inner links 12. Specifically, the remaining ends of the pins 18, which are inserted into the bushings 16 of the two inner links 12, are respectively press-fitted into the pin insertion holes 15a of the other one of the outer link plates 15.

Through the above-described procedures, the two pins 18 respectively inserted into the pin insertion holes 15a are joined to the two outer link plates 15. This obtains a single outer link 13. In this case, the two inner links 12 are connected by this outer link 13.

The above procedures are repeated to connect inner links 12 and outer links 13 so that the inner links 12 and the outer links 13 are alternately arranged in the lengthwise direction X. Further, the inner links 12 and the outer links 13, which are alternately arranged in the lengthwise direction X, are connected to form a ring shape as a whole. As a result, each pair of the outer link plates 15 sandwiches two adjacent pairs of the inner link plates 14. Also, the bushings 16 and the pins 18 are arranged so that two pins 18 are located between each pair of the outer link plates 15.

The chain 11 may be manufactured through the above-described procedures. The components of the chain 11 may be coupled in any order.

### Application of Chain

Although the application of the chain 11 is not particularly limited, the chain 11 may be used in a small-sized device. Examples of a small-small-sized device include, a medical device, an industrial robot, or the like. Specific examples of a medical device include a medical endoscope. The chain 11 may be used in a medical endoscope to control movement of a probe located on a probe portion. In this case, a videoscope or a camera may be mounted on the probe. Specific examples of an industrial robot include a robot used for inspection of a storage container in a nuclear power plant.

### Operation and Advantages

The operation and advantages of the chain 11 in accordance with the present embodiment will now be described.
(1) The chain 11 includes pairs of the inner link plates 14, the cylindrical bushings 16, the pins 18, and pairs of the outer link plates 15. Each pair of the inner link plates 14 includes two inner link plates 14 facing each other. Each of the bushings 16 is located between two paired inner link plates 14 and connects the inner link plates 14. The pins 18 are respectively inserted into the bushings 16 in a rotatable manner. Two paired outer link plates 15 are arranged at opposite ends of a corresponding one of the pins 18. Two paired outer link plates 15 sandwich two adjacent pairs of the inner link plates 14. The bushings 16 and the pins 18 are arranged so that two pins 18 are located between two paired outer link plates 15. The pitch of the chain 11 is 0.8 mm or greater and 3 mm or less.
   An ultra-compact chain 11 having the pitch of 3 mm or less may be provided. Such a chain 11 is suitably used in a compact device. Also, when the lower limit of the pitch is 0.8 mm or greater, the chain 11 is readily manufactured. This improves the production efficiency of the chain 11.
(2) At least one of the thickness T1 of the inner link plate 14 and the thickness T2 of the outer link plate 15 is 0.1 mm or greater and 0.4 mm or less. This reduces the weight of the at least one of the inner link plate 14 and the outer link plate 15 while maintaining its mechanical strength.
(3) The diameter T5 of the pin 18 is 0.2 mm or greater and 1 mm or less. This reduces the weight of the pin 18 while maintaining its mechanical strength.
(4) The thickness T3 of the circumferential wall of the bushing 16 is 0.05 mm or greater and 0.2 mm or less. This reduces the weight of the bushing 16 while maintaining its mechanical strength.
(5) The ratio of the thickness T3 of the circumferential wall of the bushing 16 to the pitch of the chain 11 is 0.05 or greater and 0.2 or less. When the ratio of thickness T3 of the circumferential wall of the bushing 16 to the pitch of the chain 11 is 0.05 or greater, the dimensional accuracy of the bushing 16 is improved. Further, when the ratio T3 of the thickness of the circumferential wall of the bushing 16 to the pitch of the chain 11 is 0.2 or less, the chain 11 is reduced in weight.
(6) The separation distance between two paired outer link plates 15, or the distance D2 between two paired outer link plates 15, is 0.9 mm or greater and 3 mm or less. When the distance D2 between the paired outer link plates 15 is 0.9 mm or greater, wear of the chain 11 caused by misalignment of the sprockets may be avoided. Further, when the distance D2 between two paired outer link plates 15 is 3 mm or less, the chain 11 is reduced in dimension in the widthwise direction Y.
(7) The thickness T4 of the circumferential wall of the roller 17 is 0.08 mm or greater and 0.3 mm or less. This reduces the weight of the roller 17 while maintaining its mechanical strength.
(8) The bushing 16 is separate from two paired inner link plates 14. When the bushing 16 and the inner link plate 14 are formed separately, the dimensional accuracy of the bushing 16 and the inner link plate 14 is improved.
(9) The pin 18 is a cold-drawn body. This improves the dimensional accuracy of the pin 18.
(10) When at least one of the inner link plate 14 and the outer link plate 15 is formed by cold-rolling, the dimensional accuracy of the at least one of the inner link plate 14 and the outer link plate 15 is improved.

### Modified Examples

The present embodiment may be modified as described below. The present embodiment and the following modifications can be combined as long as the combined modifications remain technically consistent with each other.

In the present embodiment, the chain 11 includes the rollers 17. However, the rollers 17 may be omitted.

As shown in Figs. 3 and 4, for example, the rollers 17 may be omitted from the chain 11. In this case, the inner links 12 of the chain 11 may each include two paired inner link plates 14 and the bushings 16 located between the two paired inner link plates 14.

In the present embodiment, the bushing 16 is separate from two paired inner link plates 14. However, there is no limitation to such a structure. At least one of the two paired inner link plates 14 may be integrated with the bushing 16. That is, at least one of the two paired inner link plates 14 may be integrally molded with the bushing 16. In a state in which at least one of the two paired inner link plates 14 is integrally molded with the bushing 16, the bushing 16 may be located between the two paired inner link plates 14 and connect the inner link plates 14.

In the present embodiment, the method for manufacturing the chain 11 includes the hardening step, the molding step, and the assembling step. However, there is no limitation to such a configuration. For example, when the application of the chain 11 does not require high hardness, the hardening step may be omitted. Alternatively, for example, the molding step and the assembling step may be performed on a commercially available member that is pre-hardened. That is, the molding step and the assembling step may be performed on a member that has already undergone the hardening step separately.

In the present embodiment, the bushing 16 is press-fitted into the through hole 14a of the inner link plate 14. However, there is no limitation to such a structure. The bushing 16 may be welded to the wall of the through hole 14a of the inner link plate 14, or adhered to the wall of the through hole 14a by an adhesive. In the same manner, the pin 18 may be attached to the wall of the pin insertion holes 15a of the outer link plate 15.

The pitch P1 between the axes of two adjacent pins 18 between two paired outer link plates 15 does not have to be the same as the pitch P2 between the axes of two adjacent pins 18 in adjacent ones of the outer link plates 15 in the lengthwise direction X. The pitch P1 between the axes may differ from the pitch P2 between the axes.

## Claims

1. A chain, comprising:
pairs of inner link plates, each including two inner link plates facing each other;
cylindrical bushings, each located between the two inner link plates and connecting the two inner link plates;
pins, respectively inserted into the bushings in a rotatable manner; and
pairs of outer link plates, each including two outer link plates sandwiching two of the pairs of inner link plates arranged adjacent to each other, wherein
the two outer link plates are arranged at opposite ends of a corresponding one of the pins,
the bushings and the pins are arranged so that two of the pins are located between the two outer link plates, and
a distance between axes of adjacent ones of the pins is 0.8 mm or greater and 3 mm or less.

2. The chain according to claim 1, wherein at least one of each of the inner link plates and each of the outer link plates has a thickness of 0.1 mm or greater and 0.4 mm or less.

3. The chain according to claim 1 or 2, wherein each of the pins has a diameter of 0.2 mm or greater and 1 mm or less.

4. The chain according to any one of claims 1 to 3, wherein each of the bushings has a thickness of 0.05 mm or greater and 0.2 mm or less.

5. The chain according to any one of claims 1 to 4, wherein a ratio of a thickness of each of the bushing to the distance between axes of adjacent ones of the pins is 0.05 or greater and 0.2 or less.

6. The chain according to any one of claims 1 to 5, wherein a separation distance between the two outer link plates is 0.9 mm or greater and 3 mm or less.

7. The chain according to any one of claims 1 to 6, further comprising a roller loosely fitted to each of the bushings.

8. The chain according to claim 7, wherein the roller has a thickness of 0.08 mm or greater and 0.3 mm or less.

9. The chain according to any one of claims 1 to 8, wherein each of the bushings is separate from the two inner link plates.

10. The chain according to any one of claims 1 to 9, wherein each of the pins is a cold-drawn body.

11. The chain according to any one of claims 1 to 10, wherein at least one of each of the inner link plates and each of the outer link plates is cold-rolled.
